# FASCICULE DE BREVET EUROPEEN

(11) **EP 2 002 708 B1**
(45) Date de publication et mention de la délivrance du brevet: **11.10.2017**
(21) Numéro de dépôt: 08158077.1
(22) Date de dépôt: 11.06.2008
(51) Int. Cl.: A01G 17/14, E04H 17/20

(54) **Piquet métallique en forme de cornière pour le support de fil de soutien de branches d'arbres et procédé de fabrication**
Metallpflock in Form eines Winkeleisens als Halterung für Stützdraht von Baumästen und entsprechendes Herstellungsverfahren
Metal peg shaped like an angle iron for holding wire for supporting tree branches and manufacturing method

(30) Priorité: 13.06.2007 FR 0704218
(43) Date de publication de la demande: 17.12.2008
(73) Titulaire: Julien,, M. Patrick, 84290 Cairanne (FR)
(72) Inventeur: Julien,, M. Patrick, 84290 Cairanne (FR)
(74) Mandataire: Novagraaf Technologies

(56) Documents cités:
- FR-A- 1 443 375
- FR-A- 2 437 157
- FR-A- 2 601 846
- FR-A- 2 838 603

## Description

La présente invention a pour objet des perfectionnements à des piquets profilés métalliques en forme de cornière de section en « L » à deux ailes.

Le secteur technique de l'invention concerne le domaine de la réalisation de piquets métalliques aptes en particulier à supporter au moins un fil de soutien tel que de branches d'arbres exploités en culture de la vigne, des arbres fruitiers ou d'arbres similaires; de tels piquets peuvent avoir d'autres applications tels que pour du tuteurage, polissage, balisage, clôture....

On connaît déjà divers types de tels piquets dont ceux décrits dans les demandes de brevet françaises :
- FR 15 623 63 du 26 mars 1968 qui est un piquet de petite section pleine circulaire de diamètre 8 mm comportant des crochets rapportés, fixes, et orientés pour recevoir des fils de soutien, dits de palissage, dans la hauteur hors-terre des piquets,
- FR 25 70 575, FR 27 12 141, FR 28 36 331 ou FR 28 78 406 portant sur des piquets réalisés à partir de bandes métalliques pliées en forme de « U » pour offrir une bonne résistance latérale d'ancrage dans le sol et ayant pour certains une inertie de section renforcée par des pliages additionnels pour mieux résister à la torsion et à la flexion,
- Fr 28 38 603 décrivant un piquet profilé de section en « L », c'est-à-dire comportant deux ailes faisant entre elles un angle et aux extrémités desquelles des moyens de rétention transversale permettent de coincer des moyens d'accrochage des fils de palissage : de telles cornières en « L » sont en effet réalisées par extrusion, c'est-à-dire par écoulement de métal fluidifié dans une filière profilée, et ne comportent donc pas de dispositif pour accrocher les fils de soutien des branches d'arbres que l'on veut exploiter et qui est le but desdits piquets, nécessitant pour ceux décrits dans ce dernier brevet l'ajout desdits moyens d'accrochage.

Il peut également être réalisé dans de tels piquets, fabriqués à partir de cornières en « L » extrudées, des parachèvements (tels que des trous, des encoches...) afin de recevoir lesdits fils de soutien, mais ces parachèvements sont effectués sur des bancs de poinçonnage après extrusion.

Par contre, pour les piquets en forme de « U » cités dans les brevets précédents et obtenus par pliage, des trous de passage, et des linguets ou agrafes peuvent être réalisés dans la bande métallique initiale avant son pliage en découpant celle-ci, respectivement dans la partie formant la base de « U » et dans celle formant les ailes, ce qui n'est pas possible avec un profilé extrudé déjà en forme de « L », et lesdits trous, linguets ou agrafes permettent d'accrocher directement des accessoires ou de passer les fils tendeurs évoqués précédemment, sans pièce intermédiaire rapportée.

Il n'est pas possible cependant dans de tels piquets en « U » de réaliser des encoches débouchant dans les bords des ailes du profil pour y passer les fils tendeurs et/ou de soutien puisque de tels piquets en « U » doivent être disposés avec leurs ailes latérales parallèles aux dits fils. De tels piquets en « U » ne permettent pas, au moins pour cette raison, et pour d'autres, une grande souplesse d'utilisation, même s'ils offrent une bonne inertie et une bonne résistance à la torsion.

Le problème posé est de perfectionner des piquets de type cornière en forme de « L » qui offrent plus de souplesse d'utilisation que ceux en forme de « U » tel qu'indiqué ci-dessus, tout en offrant les avantages de ces derniers, même si leur inertie et leur résistance à la torsion à dimensions et poids égaux ne sont pas aussi importantes, tout en étant cependant de résistance supérieur par rapport aux cornières de forme en « L » connues à ce jour, lesdits piquets devant de plus pouvoir être stockés en s'empilant les uns dans les autres pour occuper le moins de place possible.

Une solution au problème posé est un procédé de fabrication de piquets métalliques aptes à supporter au moins un fil de soutien tels que de branches d'arbres exploités en culture viticole ou fruitière et suivant lequel on dispose de préférence sur une seule machine profileuse un ensemble de têtes de galets telles qu'en nombre de dix-huit à dix-neuf et dont les surfaces constituent des matrices de formes données, lesquels galets étant positionnés par groupes les uns face aux autres et lesdits groupes étant répartis successivement les uns après les autres suivant une même direction, et on règle ces têtes de galets pour qu'elles soient aptes à déformer progressivement et à plier une bande métallique initiale suivant un profilé de section prédéterminée quand on fait passer ladite bande entre ces successions de têtes de galets. Suivant la présente invention :
- on sélectionne une bande métallique d'au moins 50 mm de largeur initiale à plat et d'au moins 0,6 mm d'épaisseur,
- on poinçonne cette bande pour y réaliser des trous tel qu'au moins certains d'entre eux soient à une distance les uns des autres correspondant à la hauteur desdits piquets métalliques,
- on plie ladite bande de préférence en son milieu dans le sens de sa longueur, et suivant un angle d'environ 90° et on constitue une cornière en forme de « L »,
- on déforme, par la forme des matrices des têtes de galets, chaque aile de cette cornière par enfoncements en au moins trois points, constituant au moins six pliures en plus de celle de l'angle commun entre les deux ailes,
- on découpe la cornière en « L » ainsi réalisée en continu suivant des longueurs correspondant à la hauteur des piquets voulue.

Dans des modes particuliers de réalisation :
- on poinçonne ladite bande métallique avant pliage en y effectuant dans au moins une des parties devant constituer une aile de la cornière au moins une découpe en forme de « U », on déforme la surface intérieure du « U » ainsi découpée vers l'extérieur de la bande métallique en restant fixée à celle-ci par son côté non découpé et on forme ainsi un linguet apte à supporter un fil de soutien.
- on poinçonne ladite bande métallique avant pliage en y effectuant au moins une découpe suivant une courbe arrondie débouchant le long d'un bord de cette bande, et en enlevant complètement la surface intérieure ainsi découpée on obtient une encoche apte à supporter un fil de soutien.

Une autre solution au problème posé est un piquet métallique apte à supporter au moins un fil de soutien tels que de branches d'arbres, et dont la section est celle d'une cornière en forme de « L » à deux ailes quasi-perpendiculaires comportant au moins un trou pour le passage dudit fil de soutien et tel que chacune de ces ailes comporte au moins six pliures en plus de celle de forme arrondie constituant l'angle commun entre les deux ailes, les pliures de chaque extrémité de ces deux ailes étant de forme également arrondie, et ledit piquet étant obtenu par déformation d'une bande métallique d'au moins 50 mm de largeur initiale et d'au moins 0,6 mm d'épaisseur.

De tels piquets métalliques sont réalisés, après toutes les opérations de poinçonnages et découpes telles que décrites précédemment, pour obtenir les trous, les encoches, les linguets... soit par profilage tel que dans le procédé de fabrication suivant l'invention exposé ci-dessus, soit par pliage c'est-à-dire en bande à bande, (flan par flan), sur une presse plieuse.

On comptera dans toute la présente description comme pliure toute déformation du profilé formant une rainure sur toute la hauteur du piquet et dont la concavité est tournée soit vers l'intérieur soit vers l'extérieur du profilé formant ledit piquet, l'intérieur étant le volume de 90° stéradian délimité entre les deux ailes de la cornière. Ainsi, une déformation par emboutissage longitudinal en creux sur une face d'une bande métallique pour y former une sorte de sillon ou gorge crée en fait trois pliures, l'une constituée par ledit sillon et deux autres sur la face opposée constituées entre les côtés latéraux de la bosse longitudinale créée par ledit emboutissage et faisant saillie, et les parties latérales de la bande métallique entourant cette bosse.

Le résultat est de nouveaux piquets profilés perfectionnés offrant une meilleure résistance à la torsion et à la flexion que les cornières connues en « L », extrudées, et/ou ne comportant pas de plis ou pliures, mais ayant une épaisseur et des dimensions extérieures identiques: de tels piquets suivant l'invention peuvent être réalisées dans de grandes dimensions à partir de bandes métalliques jusqu'à 150 mm de largeur et 4 mm d'épaisseur, réalisables en continu sur une seule ligne de profilage, pouvant disposer de trous, linguets et encoches réalisés également en continu dans le procédé de fabrication de ces piquets, et offrant ainsi une grande souplesse d'utilisation, en particulier en pouvant supporter un nombre important de fils de soutien et cela dans au moins les deux directions définies par les deux ailes de la cornière en « L ».

La mise en oeuvre d'un ensemble de têtes de galets dont les surfaces sont en forme de matrices correspondant aux profilés et aux pliures de l'invention n'a pas besoin d'être décrite plus précisément dans la présente description, car tout homme du métier connaît de telles machines profileuses utilisées pour d'autres réalisations de profilés, même si on utilise ici des bandes métalliques initiales d'épaisseur importante comme indiqué précédemment et en acier haute résistance tel que préférentiellement de type S250GD mais pouvant aller jusqu'au S350GD ou même au-delà, cet acier étant également galvanisé pour le protéger de la corrosion.

L'ensemble de ces caractéristiques, ainsi que celles décrites ci-après, apportent ainsi de nombreux avantages aux piquets selon l'invention et en montre la nouveauté et l'intérêt.

La description et les dessins ci-joints représentent un exemple de réalisation de l'invention mais n'ont aucun caractère limitatif : d'autres réalisations sont possibles dans le cadre de la portée et de l'étendue de cette invention.
- la figure 1 est une vue en coupe transversale par rapport à l'axe longitudinal d'un exemple de piquet selon l'invention,
- la figure 2 est une vue perspective simplifiée d'un exemple de piquet selon l'invention en configuration d'utilisation.

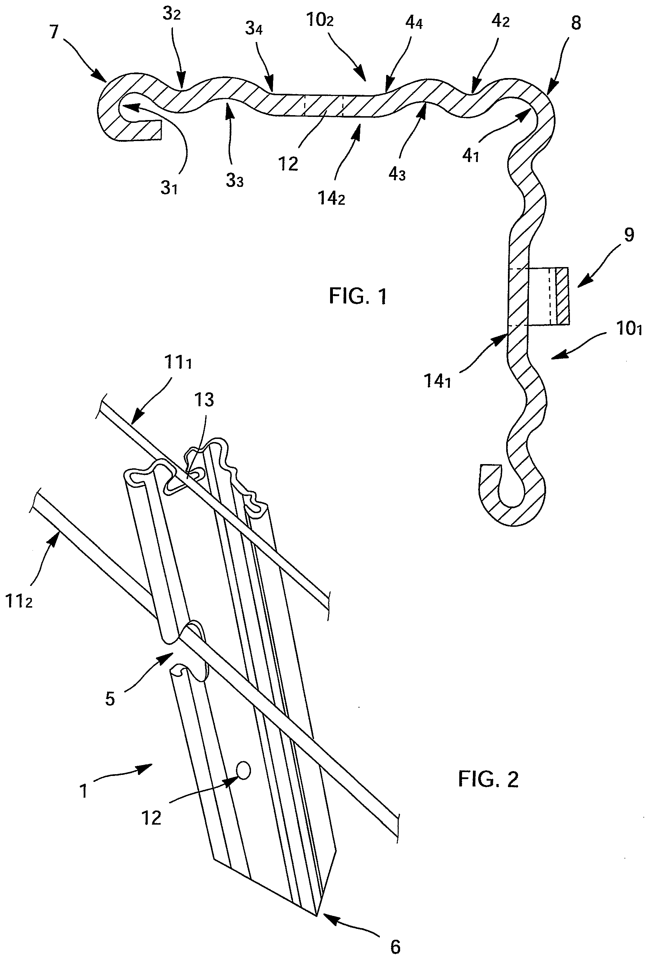

Le piquet métallique 1 représenté est ainsi apte à supporter au moins un fil de soutien 11 et bien sûr plusieurs de branches d'arbres exploités en culture viticole ou fruitière, et dont la section 2 suivant la figure 1 est celle d'une cornière en forme de « L » à deux ailes 10 quasi-perpendiculaires et de préférence exactement perpendiculaires ou légèrement plus que 90°, tel que 95° maximum, pour faciliter leur superposition par empilement des piquets les uns dans les autres, et comportant au moins un trou 9, 5, 12, 13 pour le passage dudit fil de soutien 11.

Selon la figure 1 chacune de ces ailes 10 comporte au moins six pliures 3, 4 en plus de celle 4₁ de forme arrondie constituant l'angle commun 8 entre les deux ailes 10, les pliures de chaque extrémité 7 de ces deux ailes 10 sont de forme également arrondie.

Ledit piquet est obtenu par déformation soit par pliage, soit par profilage suivant le procédé décrit précédemment, d'une bande métallique plane d'au moins 50 mm de largeur initiale et d'au moins 0,6 mm d'épaisseur.

Comme représenté sur la figure 2, le piquet 1 suivant l'invention comporte à son extrémité destinée à être plantée dans le sol une pointe 6 réalisée par coupe en biseau de chacune de ces ailes 10, ce qui n'est pas possible avec un piquet de section en forme de U.

De préférence, les formes arrondies de l'angle commun 4 et des extrémités 7 des ailes 10 ont le même rayon de courbure, et la pliure 3 des extrémités libres 7 des ailes 10 est refermée vers l'intérieur de la section 2 en formant un arrondi d'au moins 180°.

Suivant la représentation de la figure 1, chaque aile 10 comporte une partie plane 14 séparant les pliures 3, 4 en groupes d'au moins trois, le nombre total des pliures par aile étant alors de sept en plus de celle 4₁ de l'angle commun 8. Lesdites parties planes 14₁, 14₂ sont encadrées par deux pliures 3₄ et 4₄, ce qui augmente la résistance des ailes 10 et la concavité de ces pliures étant tournée vers l'extérieur de la cornière, les parties planes 14 sont en creux par rapport à la surface de l'enveloppe tangente à toutes les parties les plus extérieures de la cornière.

Dans d'autres modes de réalisation à partir de bandes métalliques de plus grande largeur pour obtenir des piquets métalliques de sections plus importantes, les piquets obtenus suivant l'invention comportent au moins huit pliures 3, 4 sur chaque aile, et même au moins onze pliures si la bande initiale a une largeur d'au moins 100 mm.

Suivant la figure 1 ledit piquet comporte également au moins sur une de ces ailes un linguet ou agrafe 9, obtenu par poinçonnage puis déformation vers l'extérieur de la bande métallique initiale avant son pliage tel que décrit précédemment.

Sur la figure 2, le piquet métallique comporte au moins une encoche 5 réalisée par découpage du bord de la bande métallique initiale avant son pliage.

Au moins un linguet 9 ou une encoche 5 peut être réalisé sur chacune des ailes du piquet ou indifféremment sur l'une ou l'autre en fonction de l'usage et de la technicité recherchés si l'on veut utiliser le piquet dans un sens ou dans un autre en fonction de la direction des fils de soutien 11 ou si l'on ne veut donner qu'une seule orientation d'utilisation.

Dans les modes de réalisation tel que celui de la figure 1 avec une partie plane 14, lesdits linguets 9 et/ou les trous 12 sont réalisés dans ladite partie plane 14; des trous peuvent être également réalisés par poinçonnage dans la partie 4₁ formant l'angle commun 8 et ce poinçonnage étant effectué bien sûr avant profilage/pliage de la bande métallique initiale.

De plus, un tel piquet peut comporter au moins une encoche 13 de toute forme apte à recevoir un ou deux fils de maintien, et disposant pour cela d'une ouverture étroite de largeur au moins égale au diamètre d'un fil et débouchant sur un logement plus large, telle qu'une forme de « haricot » ou de triangle : cette encoche 13 est disposée à son extrémité opposée à celle 6 devant être plantée dans le sol et dans au moins une de ces ailes 10 telle que représentée sur la figure 2 ; cette encoche 13 peut être réalisée avant pliage de la bande métallique initiale par poinçonnage et découpe de celle-ci, comme pour les trous 12 ou les encoches 5, avec enlèvement de matière à la limite de la découpe prévisible de deux piquets successifs : ces coupes entre deux piquets, étant réalisées en sortie de machine profileuse en fin de procédé de pliages, passent alors dans chaque trou ainsi préalablement réalisé et ouvrent ceux-ci pour former lesdites encoches en forme de « haricots » ou d'autres figures.

## Revendications

1. Piquet métallique (1) apte à supporter au moins un fil de soutien (11) tel que de branches d'arbres exploités en culture viticole ou fruitière, et dont la section (2) est celle d'une cornière en forme de « L » à deux ailes (10) quasi-perpendiculaires comportant au moins un trou (5, 9, 12, 13) pour le passage dudit fil de soutien (11), **caractérisé en ce que** chacune de ces ailes (10) comporte au moins six pliures (3, 4) en plus de celle (4₁) de forme arrondie constituant l'angle commun (8) entre les deux ailes (10), les pliures de chaque extrémité (7) de ces deux ailes (10) sont de forme également arrondie, et ledit piquet est obtenu par déformation d'une bande métallique d'au moins 50 mm de largeur initiale et d'au moins 0,6 mm d'épaisseur.

2. Piquet suivant la revendication 1, **caractérisé en ce qu'**il comporte à son extrémité destinée à être plantée dans le sol une pointe (6) réalisée par coupe en biseau de chacune de ces ailes (10).

3. Piquet suivant l'une quelconque des revendications 1 ou 2, **caractérisé en ce qu'**il comporte indifféremment sur chacune de ses ailes au moins un linguet (9) ou une encoche (5).

4. Piquet suivant l'une quelconque des revendications 1 à 3, **caractérisé en ce que** les formes arrondies de l'angle commun (4) et des extrémités (7) des ailes (10) sont de même rayon de courbure.

5. Piquet suivant l'une quelconque des revendications 1 à 4, **caractérisé en ce qu'**il comporte au moins une encoche (13) disposant d'une ouverture étroite débouchant sur un logement plus large, disposée à son extrémité opposée à celle devant être plantée dans le sol et dans au moins une de ces ailes (10).

6. Piquet suivant l'une quelconque des revendications 1 à 5, **caractérisé en ce que** chaque aile (10) comporte une partie plane (14) séparant les pliures (3, 4) en groupes d'au moins trois, le nombre total des pliures par aile étant de sept en plus de celle (4₁) de l'angle commun (8).

7. Piquet selon la revendication 3 et la revendication 6, **caractérisé en ce que** les linguets (9) et/ou les trous (12) sont réalisés dans ladite partie plane (14).

8. Piquet selon l'une quelconques des revendications 1 à 7, **caractérisé en ce que** la pliure (3) des extrémités libres (7) des ailes (10) est refermée vers l'intérieur de la section (2) en formant un arrondi d'au moins 180°.

9. Piquet selon l'une quelconque des revendications 1 à 8, **caractérisé en ce qu'**il comporte au moins huit pliures (3, 4) sur chaque aile.

10. Piquet selon l'une quelconque des revendications 1 à 9, **caractérisé en ce qu'**il comporte au moins onze pliures (3, 4) sur chaque aile, la bande initiale ayant une largeur d'au moins 100 mm.

11. Procédé de fabrication de piquets métalliques (1) aptes à supporter au moins un fil de soutien (11) de branches d'arbres exploités en culture viticole ou fruitière et suivant lequel on dispose un ensemble de têtes de galets dont les surfaces constituent des matrices de formes données, lesquels galets étant positionnés par groupes les uns face aux autres et lesdits groupes étant répartis successivement les uns après les autres suivant une même direction, on règle ces têtes de galets pour qu'elles soient aptes à déformer progressivement et à plier une bande métallique initiale suivant un profilé de section prédéterminée quand on fait passer ladite bande entre cette succession de têtes de galets,
- on sélectionne une bande métallique d'au moins 50 mm de largeur initiale à plat et d'au moins 0,6 mm d'épaisseur, et
- on poinçonne cette bande pour y réaliser des trous (5, 9, 12, 13) tel qu'au moins certains d'entre eux soient à une distance les uns des autres correspondant à la hauteur desdits piquets métalliques,
**caractérisé en ce que** :
- on plie ladite bande de préférence dans le sens de sa longueur, et suivant un angle (8) d'environ 90° et on constitue une cornière en forme de « L »,
- on déforme, par la forme des matrices des têtes de galets, chaque aile (10) de cette cornière par enfoncements en au moins trois points, constituant au moins six pliures (3, 4) en plus de celle (4₁) de l'angle commun (8) entre les deux ailes (10),
- on découpe la cornière en « L » ainsi réalisée en continu suivant des longueurs correspondant à la hauteur des piquets (1) voulue.

12. Procédé suivant la revendication 11, **caractérisé en ce qu'**on poinçonne ladite bande métallique avant pliage en y effectuant dans au moins une des parties devant constituer une aile de la cornière au moins une découpe en forme de « U », on déforme la surface intérieure du « U » ainsi découpée vers l'extérieur de la bande métallique en restant fixée à celle-ci par son côté non découpé et on forme ainsi un linguet (9) apte à supporter un fil de soutien (11).

13. Procédé suivant l'une quelconque des revendications 11 ou 12, **caractérisé en ce qu'**on poinçonne ladite bande métallique avant pliage en y effectuant au moins une découpe suivant une courbe arrondie débouchant le long d'un bord de cette bande, et en enlevant complètement la surface intérieure ainsi découpée on obtient une encoche (5) apte à supporter un fil de soutien (11).

## Patentansprüche

1. Metallpflock (1), der geeignet ist, mindestens einen Stützdraht (11) zum Stützen von im Weinbau oder Obstbau genutzten Baumästen zu halten, dessen Querschnitt (2) der eines L-förmigen Winkeleisens mit zwei nahezu rechtwinkligen Schenkeln (10) ist, das mindestens ein Loch (5, 9, 12, 13) zum Durchführen des Stützdrahts (11) umfasst, **dadurch gekennzeichnet, dass** jeder dieser Schenkel (10) mindestens sechs Biegungen (3, 4) zusätzlich zu der gerundeten (4₁), die den gemeinsam Winkel (8) zwischen den beiden Schenkeln (10) bildet, umfasst, wobei die Biegungen jedes Endes (7) dieser beiden Schenkel (10) ebenfalls gerundet sind und der Pflock durch Umformen eines Metallbandes von mindestens 50 mm Ausgangsbreite und mindestens 0,6 mm Dicke erhalten wird.

2. Pflock nach Anspruch 1, **dadurch gekennzeichnet, dass** er an seinem Ende, das dazu bestimmt ist, in den Boden eingeschlagen zu werden, eine Spitze (6) umfasst, die durch abgeschrägtes Schneiden jedes dieser Schenkel (10) ausgeführt wird.

3. Pflock nach einem der Ansprüche 1 oder 2, **dadurch gekennzeichnet, dass** er unterschiedslos an jedem seiner Schenkel mindestens einen Haken (9) oder eine Einkerbung (5) umfasst.

4. Pflock nach einem der Ansprüche 1 bis 3, **dadurch gekennzeichnet, dass** die gerundeten Formen des gemeinsamen Winkels (4) und der Enden (7) der Schenkel (10) den gleichen Biegeradius haben.

5. Pflock nach einem der Ansprüche 1 bis 4, **dadurch gekennzeichnet, dass** er mindestens eine Einkerbung (13) umfasst, die über eine schmale Öffnung verfügt, die in eine breitere Aufnahme mündet, die an dem Ende, das dem Ende, das in den Boden eingeschlagen werden soll, gegenüberliegt, und in mindestens einem dieser Schenkel (10) angeordnet ist.

6. Pflock nach einem der Ansprüche 1 bis 5, **dadurch gekennzeichnet, dass** jeder Schenkel (10) einen ebenen Bereich (14) umfasst, der die Biegungen (3, 4) in Gruppen von mindestens drei trennt, wobei die Gesamtzahl der Biegungen je Schenkel sieben zuzüglich der (4₁) des gemeinsamen Winkels (8) beträgt.

7. Pflock nach Anspruch 3 und Anspruch 6, **dadurch gekennzeichnet, dass** die Haken (9) und/oder die Löcher (12) in dem ebenen Bereich (14) ausgeführt sind.

8. Pflock nach einem der Ansprüche 1 bis 7, **dadurch gekennzeichnet, dass** die Biegung (3) der freien Enden (7) der Schenkel (10) zum Inneren des Querschnitts (2) hin geschlossen ist, indem eine Rundung von mindestens 180° gebildet wird.

9. Pflock nach einem der Ansprüche 1 bis 8, **dadurch gekennzeichnet, dass** er mindestens acht Biegungen (3, 4) an jedem Schenkel umfasst.

10. Pflock nach einem der Ansprüche 1 bis 9, **dadurch gekennzeichnet, dass** er mindestens elf Biegungen (3, 4) an jedem Schenkel umfasst, wobei das Ausgangsband eine Breite von mindestens 100 mm hat.

11. Verfahren zur Herstellung von Metallpflöcken (1), die geeignet sind, mindestens einen Stützdraht (11) von im Weinbau oder Obstbau genutzten Baumästen zu halten, gemäß dem ein Satz Rollenköpfe angeordnet wird, deren Oberflächen Matrizen gegebener Formen bilden, wobei die Rollen in Gruppen einander gegenüber positioniert werden und die Gruppen hintereinander in derselben Richtung verteilt werden,
- diese Rollenköpfe so eingestellt werden, dass sie geeignet sind, ein Ausgangsmetallband gemäß einem Profil mit vorherbestimmtem Querschnitt schrittweise umzuformen und zu biegen, wenn man das Band zwischen dieser Abfolge von Rollenköpfen durchlaufen lässt,
- ein flaches Metallband von mindestens 50 mm Ausgangsbreite und mindestens 0,6 mm Dicke gewählt wird, und
- dieses Band gestanzt wird, um darin Löcher (5, 9, 12, 13) auszuführen, so dass mindestens einige von ihnen einen Abstand voneinander haben, welcher der Höhe der Metallpflöcke entspricht,
**dadurch gekennzeichnet, dass**:
- das Band bevorzugt in Richtung seiner Länge und gemäß einem Winkel (8) von etwa 90° gebogen wird und ein L-förmiges Winkeleisen gebildet wird,
- jeder Schenkel (10) dieses Winkeleisens durch die Form der Matrizen der Rollenköpfe durch Eindrückungen an mindestens drei Stellen umgeformt wird, so dass mindestens sechs Biegungen (3, 4) zuzüglich der (4₁) des gemeinsamen Winkels (8) zwischen den beiden Schenkeln (10) gebildet werden,
- das so ausgeführte L-förmige Winkeleisen kontinuierlich in Längen geschnitten wird, die der gewünschten Höhe der Pflöcke (1) entsprechen.

12. Verfahren nach Anspruch 11, **dadurch gekennzeichnet, dass** das Metallband vor dem Biegen gestanzt wird, indem darin in mindestens einem der Bereiche, die einen Schenkel des Winkeleisens bilden sollen, mindestens ein U-förmiger Ausschnitt vorgenommen wird, die so ausgeschnittene Innenfläche des U zur Außenseite des Metallbandes hin umgeformt wird, wobei sie an ihrer nicht ausgeschnittenen Seite an ihm befestigt bleibt, und so ein Haken (9) geformt wird, der geeignet ist, einen Stützdraht (11) zu halten.

13. Verfahren nach einem der Ansprüche 11 oder 12, **dadurch gekennzeichnet, dass** das Metallband vor dem Biegen gestanzt wird, indem darin mindestens ein Ausschnitt entlang einer gerundeten Kurve vorgenommen wird, der entlang einer Kante dieses Bandes mündet, und indem die so ausgeschnittene Innenfläche vollständig entfernt wird, so dass man eine Einkerbung (5) erhält, die geeignet ist, einen Stützdraht (11) zu halten.

## Claims

1. Metal post (1) able to support at least one supporting wire (11) such as for branches of trees used in viticulture or fruit growing, and of which the cross section (2) is that of an L-shaped angle-iron with two near-perpendicular wings (10) comprising at least one hole (5, 9, 12, 13) for the passage of the said supporting wire (11), **characterized in that** each of these wings (10) comprises at least six bends (3, 4) in addition to the rounded one (4₁) that constitutes the common angle (8) shared by the two wings (10), the bends at each end (7) of these two wings (10) are likewise rounded in shape, and the said post is manufacted by deforming a metal strip initially at least 50 mm in width and at least 0.6 mm thick.

2. Post according to Claim 1, **characterized in that** it comprises, at its end intended to be planted in the ground, a spike (6) formed by bevel cutting each of these wings (10).

3. Post according to either one of Claims 1 and 2, **characterized in that** it comprises, on each one of its flanges without preference, at least one paw (9) or notch (5).

4. Stake according to any one of Claims 1 to 3, **characterized in that** the rounded shapes of the shared common angle (4) and of the ends (7) of the wings (10) have the same radius of curvature.

5. Post according to any one of Claims 1 to 4, **characterized in that** it comprises at least one notch (13) having a narrow opening opening onto a wider housing arranged at its end opposite to the end that is to be planted in the ground and in at least one of these wings (10).

6. Post according to any one of Claims 1 to 5, **characterized in that** each wing (10) comprises a flat part (14) separating the bends (3, 4) into groups of at least three, the total number of bends per wing being seven in addition to the one (4₁) at the shared common angle (8).

7. Post according to Claim 3 and Claim 6, **characterized in that** the paws (9) and/or the holes (12) are formed in the said flat part (14).

8. Post according to any one of Claims 1 to 7, **characterized in that** the bend (3) at the free ends (7) of the wings (10) is closed up towards the inside of the cross section (2), forming a rounding extending over at least 180°.

9. Post according to any one of Claims 1 to 8, **characterized in that** it comprises at least eight bends (3, 4) on each wing.

10. Post according to any one of Claims 1 to 9, **characterized in that** it comprises at least eleven bends (3, 4) on each flange, the initial strip having a width of at least 100 mm.

11. Method of manufacturing metal posts (1) able to support at least one supporting wire (11) for branches of trees used in viticulture or fruit growing and, according to which manufacturing method, a set of roller heads, the surfaces of which constitute dies of given shapes, being positioned in groups facing one another, and which groups being distributed in succession one after another in the same direction:
- these roller heads are set up so that they are able to deform progressively and bend an initial metal strip to a profile of predetermined cross section when the said strip is passed between this succession of roller heads,
- a metal strip initially, when flat, at least 50 mm in width and at least 0.6 mm thick is selected, and
- this strip is punched in order to make in it holes (5, 9, 12, 13) such that at least some of these are distant from one another by a distance corresponding to the height of the said metal posts,
**characterized in that**:
- the said strip is bent preferably in the direction of its length and at an angle (8) of approximately 90° thereby forming an L-shaped angle-iron,
- each wing (10) of this angle-iron is deformed, by the shape of the dies of the roller heads, by indentations at at least three points, forming at least six bends (3, 4) in addition to the one (4₁) at the common angle (8) shared by the two wings (10),
- the L-shaped angle-iron thus produced continuously is cut into lengths corresponding to the desired height of the posts (1).

12. Method according to Claim 11, **characterized in that** the said metal strip is punched before bending, producing therein, in at least one of the parts that is to constitute a wing of the angle-iron, at least one U-shaped cut-out, the interior surface of the U thus cut out is deformed towards the outside of the metal strip while remaining attached thereto by its non-cut side, thereby forming a paw (9) able to support a supporting wire (11).

13. Method according to either one of Claims 11 and 12, **characterized in that** the said metal strip is punched before bending, making in it at least one cut-out, with a rounded curve shape, opening along one edge of this strip, and by completely removing the interior surface thus cut out, a notch (5) is made and able to support a supporting wire (11).
